# EUROPÄISCHE PATENTSCHRIFT

(11) **EP 3 541 742 B1**
(45) Veröffentlichungstag und Bekanntmachung des Hinweises auf die Patenterteilung: **26.01.2022**
(21) Anmeldenummer: 17797545.5
(22) Anmeldetag: 24.10.2017
(51) Int. Cl.: C01B 3/00

(54) **VERFAHREN ZUM SPEICHERN VON WASSERSTOFFGAS, HYDRIER-REAKTOR UND TRANSPORT-CONTAINER**
METHOD FOR STORING HYDROGEN GAS, HYDROGENATION REACTOR, AND TRANSPORT CONTAINER
PROCÉDÉ DE STOCKAGE DE GAZ HYDROGÈNE, RÉACTEUR D'HYDROGÉNATION ET CONTENANT DE TRANSPORT

(30) Priorität: 16.11.2016 DE 102016222597
(43) Veröffentlichungstag der Anmeldung: 25.09.2019
(73) Patentinhaber: HYDROGENIOUS LOHC TECHNOLOGIES GMBH, 91058 Erlangen (DE)
(72) Erfinder: KUSCHE, Matthias, 90571 Schwaig (DE); MELCHER, Berthold, 91052 Erlangen (DE); RANDIG, Cornelius, 91058 Erlangen (DE); WESTERATH, Federico, 90518 Altdorf (DE); PAETZ, Caspar, 91054 Erlangen (DE); TEICHMANN, Daniel, 80796 München (DE)
(74) Vertreter: Rau, Schneck & Hübner Patentanwälte Rechtsanwälte PartGmbB
(86) Internationale Anmeldenummer: PCT/EP2017/077168
(87) Internationale Veröffentlichungsnummer: WO 2018/091238

(56) Entgegenhaltungen:
- WO-A1-2014/044706
- WO-A1-2015/110334
- WO-A1-2016/078948
- WO-A1-2016/078949
- AU-A4- 2015 100 655
- DE-A1-102014 006 430
- JP-A- 2002 134 141
- US-B1- 6 802 875

## Beschreibung

Die vorliegende Patentanmeldung nimmt die Priorität der deutschen Patentanmeldung DE 10 2016 222 597.9 in Anspruch.

Die Erfindung betrifft ein Verfahren zum Speichern von Wasserstoffgas, einen Hydrier-Reaktor sowie einen Transport-Container.

Aus EP 1 475 349 A2 ist ein Verfahren zum Speichern und Freisetzen von Wasserstoffgas an einem Wasserstoff-Trägermaterial bekannt.

Die WO 2016/078 949 A1 offenbart eine Belade-/Entlade-Einheit für Wasserstoff.

Die DE 10 2014 006 430 A1 offenbart ein Verfahren zur Energieversorgung netzferner oder mobiler Verbraucher.

Die WO 2016/078 948 A1 offenbart ein Verfahren und eine Anlage zum Erzeugen und Speichern von Wasserstoff.

US 6,802,875 B1 offenbart ein Wasserstoffversorgungssystem für eine Brennstoffzelle. JP 2002-134141 A offenbart ein System zum Speichern und Bereitstellen von Wasserstoff mittels eines flüssigen organischen Wasserstoffspeichermaterials.

Der Erfindung liegt die Aufgabe zugrunde, das Speichern von Wasserstoffgas in chemisch gebundener Form an dem Wasserstoff-Trägermaterial derart zu verbessern, dass Wasserstoffgas mittels eines robusten und unter wirtschaftlichen Gesichtspunkten durchführbaren Verfahrens zuverlässig gespeichert werden kann.

Die Aufgabe wird durch ein Verfahren mit den im Anspruch 1 angegebenen Merkmalen, mit einem Hydrier-Reaktor mit den im Anspruch 11 angegebenen Merkmalen und mit einem Transport-Container mit den im Anspruch 15 angegebenen Merkmalen gelöst. Der Kern der Erfindung besteht darin, Verfahrensschritte derart vorteilhaft zu kombinieren, dass Wasserstoffgas zuverlässig und wirtschaftlich gespeichert werden kann. Das Speichern des Wasserstoffgases erfolgt in chemisch gebundener Form an einem Wasserstoff-Trägermaterial, indem das Wasserstoff-Trägermaterial hydriert wird. Die Hydrierung des Wasserstoff-Trägermaterials erfolgt insbesondere mittels einer heterogenen Reaktionsführung. Heterogen bedeutet, dass die Reaktionspartner in verschiedenen Aggregatzuständen vorliegen. Insbesondere werden ein Katalysator mit einem Katalysatormaterial in festem Zustand, also als Feststoff, flüssiges Wasserstoff-Trägermaterial und Wasserstoffgas zum Beladen des Wasserstoffträger-Materials verwendet. Es ist auch denkbar, dass der heterogenen Reaktionsführung zwei Aggregatzustände, also insbesondere fest und flüssig, fest und gasförmig oder flüssig und gasförmig, zugrunde liegen.

Die Hydrierung des Wasserstoff-Trägermaterials ist reversibel, so dass das Wasserstoffgas zu einem späteren Zeitpunkt durch Dehydrieren des Wasserstoff-Trägermaterials wieder freigesetzt werden kann. Das Wasserstoff-Trägermaterial ist insbesondere eine organische Flüssigkeit, die auch als liquid organic hydrogen carrier (LOHC) bekannt ist, wie beispielsweise flüssige Kohlenwasserstoff-Verbindungen. Entsprechende Wasserstoffträgermaterialien sind beispielsweise aus EP 1 475 349 A2 bekannt, worauf hiermit verwiesen wird.

Erfindungsgemäß wurde gefunden, dass das Vorwärmen des zumindest teilweise dehydrierten Wasserstoff-Trägermaterials energieeffizient für das Gesamtverfahren ist. In Abhängigkeit der Reaktionsbedingungen und eines Beladezustands des Wasserstoff-Trägermaterials ist eine mehr oder weniger vollständige Hydrierung des Wasserstoff-Trägermaterials möglich. Insbesondere ist das zugeführte Wasserstoff-Trägermaterial nicht vollständig dehydriert. Das zugeführte Wasserstoff-Trägermaterial kann zu einem gewissen Anteil bereits mit Wasserstoff beladen sein. Wesentlich ist, dass das zugeführte Wasserstoff-Trägermaterial ausreichend Belade-Kapazität aufweist, um Wasserstoffgas aufzunehmen und diesen zu speichern, also mit diesem beladen zu werden. Vorteilhaft ist es, wenn das zugeführte Wasserstoff-Trägermaterial einen Beladegrad von höchstens 50%, insbesondere von höchstens 40% und insbesondere von höchstens 30% aufweist. Nach der Speicherung des Wasserstoffgases, also nach der Hydrierung des Wasserstoff-Trägermaterials, ist dessen Beladegrad größer als vorher, insbesondere größer als 70%. Besonders bevorzugt ist es, wenn das zugeführte Wasserstoff-Trägermaterial einen Beladegrad von weniger als 20 % aufweist, wobei der Beladegrad nach der Hydrierung des Wasserstoff-Trägermaterials größer ist als 95 %.

Das Speichern des Wasserstoffgases, also die Hydrierung des Wasserstoff-Trägermaterial, erfolgt insbesondere in einem Hydrier-Reaktor. Durch das Kühlen und Konditionieren des zumindest teilweise hydrierten Wasserstoff-Trägermaterials ist eine zuverlässige und risikolose Handhabung und Lagerung gewährleistet. Das erfindungsgemäße Verfahren ist insbesondere auch mit Kleinanlagen wirtschaftlich rentabel durchführbar. Derartige Kleinanlagen können dezentral betrieben werden. Eine Kleinanlage ist insbesondere transportabel, also insbesondere innerhalb eines Transport-Containers transportierbar. Eine Kleinanlage weist insbesondere eine Leistung von bis zu 5 MW auf. Zu- und Abfuhr von Wasserstoff-Trägermaterial erfolgen über LKW-Transport. Die Zu- und Abfuhr von Wasserstoff-Trägermaterial sind örtlich und zeitlich flexibel möglich. Auf träge und starre Transportsysteme wie Schifffahrt, Züge und/oder Pipelines kann verzichtet werden.

Das Verfahren ist insbesondere mit dem Hydrier-Reaktor durchführbar, der in einem an sich bekannten Transport-Container untergebracht sein kann. Mittels des Transport-Containers kann der Hydrier-Reaktor ortsunabhängig eingesetzt werden. Der Hydrier-Reaktor kann mittels des Transport-Containers flexibel und unkompliziert zu einem dezentralen Einsatzort transportiert und dort betrieben werden.

Ein Vorwärmen gemäß Anspruch 2 ermöglicht eine effiziente und unmittelbare Zuführung von Wärme vorteilhaft. Energieeffizient ist es, wenn das Edukt, also zumindest teilweise dehydriertes Wasserstoff-Trägermaterial, durch das Produkt der Hydrierung, also das zumindest teilweise hydrierte Wasserstoff-Trägermaterial, vorgewärmt wird. Die latent im Produkt vorhandene Wärme wird unmittelbar zum Vorwärmen des Edukts genutzt. Die Wärmeübertragung zwischen dem Edukt und dem Produkt kann durch ein direktes oder indirektes Kontaktieren der Wasserstoff-Trägermaterialien erfolgen. Ein direktes oder indirektes Kontaktieren des zumindest teilweise dehydrierten Wasserstoff-Trägermaterials mit dem zumindest teilweises hydriertem Wasserstoff-Trägermaterial ermöglicht zudem eine Kühlung des Produkts und/oder eine Konditionierung des Produkts. Durch das direkte Kontaktieren können aus dem zumindest teilweise hydrierten Wasserstoff-Trägermaterial Verunreinigungen unmittelbar abgetrennt werden. Eine separate Abtrennung von Verunreinigungen ist dadurch erleichtert und insbesondere entbehrlich.

Das Speichern des Wasserstoffgases, also das Hydrieren des Wasserstoff-Trägermaterials in Form LOHC, gemäß Anspruch 3 ist besonders vorteilhaft möglich. Der Reaktionsbedingungen begünstigen eine effiziente Hydrierung. Das Wasserstoffgas ist in chemisch gebundener Form an dem Wasserstoff-Trägermaterial gebunden. Eine Einlagerung von Wasserstoffgas als Reinstoff ist entbehrlich. Für die Hydrierung des Wasserstoff-Trägermaterials können Katalysatoren verwendet werden, die als Katalysatormaterial Platin, Palladium, Ruthenium, Nickel und/oder Rhodium aufweisen können und die auf einem inerten Katalysatorträger aufgebracht sind. Als inertes Material für den Katalysatorträger kann Aluminiumoxid, Siliziumoxid und/oder Siliziumcarbid verwendet werden.

Ein Konditionieren des Wasserstoffgases gemäß Anspruch 4 gewährleistet eine zuverlässige Durchführung des Verfahrens. Durch das Konditionieren des Wasserstoffgases ist das Verfahren flexibel, insbesondere unabhängig von einer Wasserstoffquelle, aus der Wasserstoffgas zur Verfügung gestellt wird, einsetzbar. Es ist bekannt, dass Wasserstoffgas in Abhängigkeit seiner Herkunft, also in Abhängigkeit der Wasserstoffgas-Quelle, unterschiedliche Verunreinigungen aufweisen kann, die jeweils verschiedene Aufreinigungsschritte erforderlich machen können. Durch die Aufreinigung des Wasserstoffgases kann die für die Speicherung, Lagerung, Handhabung und Sicherheit des Verfahrens gewährleistet werden. Das Konditionieren erfolgt insbesondere vor dem Speichern des Wasserstoffgases. Das Konditionieren umfasst insbesondere das Abtrennen mindestens einer Verunreinigung des zu speichernden Wasserstoffgases. Wasserstoffgas, das aus beliebigen Wasserstoffquellen zur Verfügung gestellt wird, ist für die kommerzielle Nutzung in der LOHC-Technologie, also für die Hydrierung von LOHC, nicht ausreichend gereinigt. In Abhängigkeit der Wasserstoffgas-Quelle können unterschiedliche Abtrennschritte vorgesehen sein, um Verunreinigungen im festen und/oder gasförmigen Aggregatzustand abzutrennen. Zusätzlich oder alternativ zum Abtrennen kann ein Vorwärmen des Wasserstoffgases vorgesehen sein. Typischerweise dient das Vorwärmen des Wasserstoffs zur Erhöhung des Wirkungsgrades der Hydrierungsreaktion.

Ein Abtrennverfahren gemäß Anspruch 5 ermöglicht separate Abtrennstufen, insbesondere in Abhängigkeit der Verunreinigungen, insbesondere in Abhängigkeit des Aggregatzustands der Verunreinigung, im zu speichernden Wasserstoffgas. Für die Abtrennung von festen Bestandteilen, insbesondere von Kokspartikeln aus der Biomassevergasung wird eine Feststoff-Trennoperation eingesetzt.

Ein Verfahren gemäß Anspruch 6 ermöglicht die Abtrennung dampfförmiger Verunreinigungen wie beispielsweise flüchtiger Amine, Halogenverbindungen, Kohlenstoffmonoxid, Wasserdampf und/oder molekularer Sauerstoff. Flüchtige Amine und Halogenverbindungen im Wasserstoffgas können aufgrund des Herstellungsprozesses, beispielsweise der Chlor-Alkali-Hydrolyse oder aufgrund eines vorgeschalteten Reinigungsschrittes, insbesondere der Amin-Wäsche, in das Wasserstoffgas gelangen. Besonders vorteilhaft für die Abtrennung der dampfförmigen Verunreinigungen ist eine katalytische Umwandlung des Wasserstoffgases mit Spuren an molekularem Sauerstoff zu Wasser und dessen Entfernung mittels adsorptiver Trocknung.

Vorteilhaft ist ein Entschwefeln gemäß Anspruch 7. Schwefelverbindungen können aus dem Wasserstoffgas abgetrennt werden. Insbesondere ist das Wasserstoffgas schwefelfrei; der Schwefelgehalt ist insbesondere kleiner als 1 ppm.

Ein Verfahren gemäß Anspruch 8 gewährleistet eine ausreichende Reinigung des Wasserstoffgases, die für dessen Weiterverarbeitung, insbesondere für die Hydrierung des Wasserstoff-Trägermaterials, erforderlich ist.

Ein Kühlen gemäß Anspruch 9 gewährleistet eine ausreichende Wärmeabfuhr des zumindest teilweise hydrierten Wasserstoff-Trägermaterials. Insbesondere wenn die Wärme des Produktstroms beispielsweise durch das Kontaktieren mit dem Eduktstrom nicht in ausreichender Menge abgeführt werden kann, gewährleistet eine zusätzliche Kühleinheit die angestrebte

Abkühlung auf einen Temperaturbereich von unter 60 °C, insbesondere von unter 50 °C und insbesondere auf unter 40 °C. Das so abgekühlte, zumindest teilweise hydrierte Wasserstoff-Trägermedium ermöglicht dessen sichere Handhabung und Lagerung, insbesondere über einen längeren Zeitraum.

Ein Konditionieren gemäß Anspruch 10 erhöht die Sicherheit beim Einlagern und Handhaben des zumindest teilweise hydrierten Wasserstoff-Trägermediums. Das Konditionieren umfasst das Entfernen von physikalisch gelöstem Wasserstoffgas in dem Wasserstoff-Trägermaterial. Dadurch kann vermieden werden, dass das zumindest teilweise hydrierte Wasserstoff-Trägermaterial bei längerer Lagerung in einem Lagerbehälter zu einem Ausgasen von nicht chemisch gebundenen Wasserstoffgas führt. Derartig freigesetztes Wasserstoffgas könnte sich in dem Lagerbehälter oberhalb der Flüssigphase des Wasserstoff-Trägermaterials sammeln und insbesondere eine explosionsfähige Wasserstoff-Atmosphäre entstehen lassen. Aufgrund der Reaktionsbedingungen beim Hydrieren, insbesondere des Prozessdruckes von bis zu 60 bar und einer ausreichend langen Verweilzeit bei hoher dynamischer Durchmischung ist von einer vollständigen Sättigung des flüssigen Wasserstoff-Trägermaterials mit Wasserstoffgas entsprechendes thermodynamischen Gleichgewichts auszugehen. Die Abtrennung des physikalisch gelösten Wasserstoffgases aus dem zumindest teilweise hydrierten Wasserstoff-Trägermaterial kann einstufig oder mehrstufig erfolgen. Beispielsweise kann die Abtrennung in einer Vakuum-Entgasungs-Einheit erfolgen. Grundsätzlich sind Abtrennverfahren möglich, die auch zum Entgasen von Wasser oder Kohlenwasserstoffen eingesetzt werden, wobei das Wasserstoff-Trägermaterial gegenüber den genannten Verbindungen eine höhere Viskosität aufweist. Insbesondere kann in einer ersten Abtrennstufe eine Verteileinheit, insbesondere in Form eines Duschkopfes, eingesetzt werden, um das LOHC-Material mit vergleichsweise hoher Viskosität zu verteilen und anschließend an eine Strip-Kolonne und/oder einen Sprühturm zu führen. Eine Beschleunigung des Prozesses ist möglich, indem der Partialdruck des Wasserstoffgases reduziert wird. Dies ist beispielsweise durch Anlagen von Vakuum und/oder durch Verwendung eines Spülgases möglich. Bei der Verwendung von Spülgas kann das Wasserstoffgas in einer Kolonne ausgetragen werden. Als Spülgas kommen Erdgase wie Stickstoff oder Argon, aber auch Druckluft zum Einsatz. Insbesondere ist es möglich, die Prozesstemperatur und die Spülgasströme, also das Volumen je Zeiteinheit des Spülgases, zu überwachen und zu regeln, um dadurch gezielt eine maximal zulässige Rest-Konzentration an Wasserstoffgas im zumindest teilweise hydrierten Wasserstoff-Trägermaterial einzustellen. Diese maximal zulässige Rest-Konzentration an physikalisch gelöstem Wasserstoffgas ist so definiert, dass sich in einem kleinen Volumen eines vollständig gefüllten Tanks bei angenommener Lagerung bis zum sich einstellenden thermodynamischen Gleichgewicht eine ausreichend hohe Wasserstoffkonzentration verhindert ist, um eine untere Explosionsgrenze von Wasserstoffgas in Luft bzw. Luft mit minimalen Anteilen an Wasserstoff-Trägermedium insbesondere LOHC, zu erreichen. Vorteilhaft ist es, wenn der im Wasserstoff-Trägermaterial verbleibende Wasserstoffgehalt zwischen 0,1 und 10 Gewichts-ppm beträgt.

Ein Hydrier-Reaktor gemäß Anspruch 11 gewährleistet eine vorteilhafte Durchführung der Hydrierung des Wasserstoff-Trägermaterials, also die Speicherung des Wasserstoffgases in chemisch gebundener Form an dem Wasserstoff-Trägermaterial. Die Vorteile des Hydrier-Reaktors entsprechen im Wesentlichen den Vorteilen des Verfahrens, worauf hiermit verwiesen wird. Es wurde gefunden, dass mit mindestens einer Katalysator-Halterung das für die Hydrierung erforderliche Katalysatormaterial vorteilhaft in einem Reaktor-Gehäuse angeordnet und für möglicherweise erforderliche Wartungen und/oder Reparaturen vorteilhaft von außerhalb des Reaktors zugänglich ist. Die Katalysator-Halterung kann eine vorteilhafte Geometrie aufweisen. Besonders vorteilhaft ist mindestens eine Ausgleichseinheit innerhalb des Reaktor-Gehäuses. Die mindestens eine Ausgleichseinheit ermöglicht eine gleichmäßige Verteilung des zu speichernden Wasserstoffgases in dem Reaktor-Gehäuse auf das Wasserstoff-Trägermaterial. Insbesondere kann die Verteilung auch in Abhängigkeit der Reaktionszeit, also entlang der Achse ansteigenden Reaktionsfortschritts, derart gleichmäßig erfolgen, dass ein Druckverlust im Reaktor-Gehäuse möglichst gering ist. Die Ausgleichseinheit kann beispielsweise als Rohrkörper ausgeführt sein, wobei der Rohrkörper insbesondere frei von Katalysatormaterial ausgeführt ist. In dem Rohrkörper kann sich das zugeführte Wasserstoffgas gleichmäßig verteilen, um der Katalysatorschüttung zugeführt zu werden. Das Rohr weist insbesondere einen Ringquerschnitt auf.

Es wurde gefunden, dass der Hydrier-Reaktor, der ohne bewegliche Teile ausgeführt ist, mechanisch besonders robust ist und für einen Dauerbetrieb besonders vorteilhaft ist. Verschleiß von Reaktorkomponenten ist im Wesentlichen ausgeschlossen. Als zusätzliche bewegliche Einheiten könnten Rührer und/oder Pumpen verstanden werden. Durch die Kühlung der mindestens einen Katalysator-Halterung mittels einer Kühleinheit kann die Wärme aus der Reaktionsenthalpie besonders effektiv ausgetragen werden. Eine Überhitzung des Katalysatormaterials und/oder des Katalysatorträgers in der Katalysator-Halterung ist ausgeschlossen. Ausfallzeiten des Hydrier-Reaktors sind minimiert. Der Gesamtwirkungsgrad, also die Gesamtbetriebsdauer bezogen auf die Gesamtlebensdauer des Hydrier-Reaktors, bei der Durchführung des Verfahrens ist erhöht. Dadurch, dass die entstehende Hydrierwärme zuverlässig aus dem Hydrier-Reaktor abgeführt werden kann, können Temperaturkonzentrationen, sogenannte Hot-Spots, vermieden werden. Die Betriebssicherheit des Hydrier-Reaktors und/oder die Robustheit des Hydrierverfahrens sind erhöht. Der Hydrier-Reaktor weist eine Verteileinheit auf, die insbesondere innerhalb einer Einlaufzone angeordnet ist. Die Verteileinheit gewährleistet das Verteilen des Zulaufstroms des zumindest teilweise dehydrierten Wasserstoff-Trägermaterials. Der Hydrier-Reaktor weist eine Austrittsöffnung auf, die insbesondere im Bereich einer Auslaufzone angeordnet ist. Über die Austrittsöffnung kann das zumindest teilweise hydrierte Wasserstoff-Trägermedium ohne oder mit möglichst geringem Druckverlust aus dem Hydrier-Reaktor abgeführt und zu einem Lagerbehälter gefördert werden. Besonders vorteilhaft ist die Durchführung des Verfahrens, in dem der Hydrier-Reaktor ausschließlich über den Wasserstoffdruck entleert wird. Dadurch ist die Verwendung beweglicher Teile und/oder zusätzlicher technischer Aggregate zum Entleeren des Reaktors entbehrlich.

Ein Katalysatormaterial gemäß Anspruch 12 ermöglicht eine vorteilhafte Hydrierung des Wasserstoff-Trägermaterials, insbesondere unter Berücksichtigung der stark exothermen Reaktionsbedingungen. Die Hydrierung des Wasserstoff-Trägermaterials ist auch bei einer vorübergehenden Überhitzung im Hydrier-Reaktor gewährleistet.

Ein Katalysatorträger gemäß Anspruch 13 gewährleistet eine vorteilhafte Bereitstellung des Katalysatormaterials, das insbesondere hitzebeständig ist. Eine Überhöhung der Reaktionstemperatur im Hydrier-Reaktor aufgrund des stark exothermen Verfahrensablaufs, ist hinsichtlich des Katalysatorträgers unproblematisch.

Eine Kühleinheit gemäß Anspruch 14 gewährleistet eine ausreichende Kühlung der mindestens einen Katalysator-Halterung, um eine zu starke Überhitzung der Katalysator-Halterung und insbesondere des in der Katalysator-Halterung angeordneten Katalysatorträgers und/oder KatalysatorMaterials, zu verhindern. Die Gefahr einer unerwünschten Überhitzung der Katalysator-Halterung in Folge der stark exothermen Reaktionsbedingungen ist zuverlässig verhindert.

Ein Transport-Container gemäß Anspruch 15 ermöglicht den flexiblen, ortsunabhängigen und dezentralen Einsatz des Verfahrens zum Speichern von Wasserstoff. Das Verfahren kann unkompliziert und bedarfsgerecht eingesetzt werden. Die für die Durchführung des Verfahrens erforderlichen Komponenten können zusätzlich in dem Transport-Container angeordnet sein. Beispielsweise sind zusätzliche Komponenten zur Durchführung des erfindungsgemäßen Verfahrens, also eine Vorwärm-Einheit zum Vorwärmen des zumindest teilweise dehydrierten Wasserstoff-Trägermaterials, eine Konditionier-Einheit zum Konditionieren des Wasserstoffgases und/oder eine Kühl-/und Konditioniereinheit zum Kühlen und/oder Konditionieren des zumindest teilweises hydrierten Wasserstoff-Trägermaterials in dem Transport-Container angeordnet. Es ist möglich, weitere Komponenten wie Speicherbehälter für Edukt und/oder Produkt sowie für Hilfsstoffe wie in Erd-Gas, Kühlwasser und/oder Wärmetransportmedium bereitzustellen. Die Speicherbehälter für Hilfsstoffe können auch außerhalb des Transport-Containers angeordnet sein. Weitere vorteilhafte Ausgestaltungen, zusätzliche Merkmale und Einzelheiten der Erfindung ergeben sich aus der nachfolgenden Beschreibung von Ausführungsbeispielen anhand der Zeichnungen. Es zeigen:
- Fig. 1: eine schematische Seitenansicht eines Transport-Containers mit einem erfindungsgemäßen Hydrier-Reaktor,
- Fig. 2: eine vergrößerte schematische Seitenansicht des Hydrier-Reaktors in Fig. 1,
- Fig. 3: eine Fig. 1 entsprechende schematische Seitenansicht eines Transport-Containers mit einem Hydrier-Reaktor gemäß einem zweiten Ausführungsbeispiel.

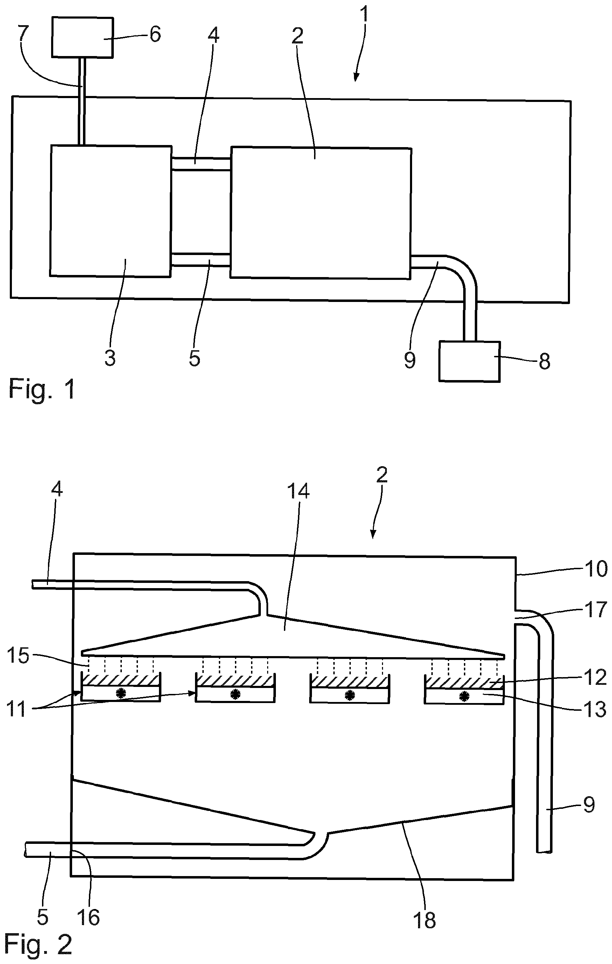

Ein in Fig. 1 gezeigter Transport-Container 1 ist an sich bekannt und kann mit einem Schiff, einem Lastkraftwagen und/oder einem Eisenbahnwagon unkompliziert transportiert werden. Der Transport-Container 1 weist standardisierte Abmessungen auf.

In dem Transport-Container 1 ist ein Hydrier-Reaktor 2 angeordnet, der mit einem LOHC-Speicherbehälter 3 mittels einer LOHC-Zuführleitung 4 und einer LOHC-Abführleitung 5 verbunden ist. LOHC dient als Wasserstoff-Trägermedium. Es ist auch denkbar, zwei getrennte LOHC-Speicherbehälter vorzusehen, wobei einer erster LOHC-Speicherbehälter über die LOHC-Zuführleitung 4 mit dem Hydrier-Reaktor 2 und ein zweiter LOHC-Speicherbehälter über die LOHC-Abführleitung 5 mit dem Hydrier-Reaktor 2 verbunden sind. Dadurch ist die getrennte Lagerung von LOHC in eine zumindest teilweise hydrierten bzw. teilweise dehydrierten Zustand möglich.

Der LOHC-Speicherbehälter 3 ist mittels einer LOHC-Quelle 6 über eine Leitung 7 verbunden. Die LOHC-Quelle 6 kann eine externe Quelle wie beispielsweise ein LOHC-Transportfahrzeug sein. Die externe Quelle kann auch ein externes LOHC-Versorgungsnetz sein, an das der Transport-Container 1 angeschlossen werden kann.

Zusätzlich oder alternativ kann die LOHC-Quelle 6 einen Dehydrier-Reaktor aufweisen oder damit verbunden sein, wobei der Dehydrier-Reaktor zum Entladen, also zumindest teilweise Dehydrieren, von LOHC dient. Dazu wird zumindest teilweise beladenes LOHC in dem nicht gezeigten Dehydrier-Reaktor entladen, also Wasserstoffgas freigesetzt. Das freigesetzte Wasserstoffgas kann beispielsweise zur Verstromung in einer Brennstoffzelle dienen. Der elektrische Strom kann vor Ort genutzt, also verbraucht werden, zumindest anteilig zum Betrieb des Transport-Containers 1 und den darin befindlichen Komponenten verwendet und/oder in ein insbesondere öffentliches Stromnetz rückgespeist werden.

Die LOHC-Quelle 6 ist insbesondere außerhalb des Transport-Containers 1 angeordnet. Die Leitung 7 kann eine geeignete Schnittstelle aufweisen, um eine unkomplizierte Verbindbarkeit mit der LOHC-Quelle zu schaffen. Die LOHC-Quelle 6 ist insbesondere stationär an einem Ort der Stromnutzung und/oder Stromeinspeisung angeordnet. Es ist möglich, die LOHC-Quelle 6 zumindest teilweise insbesondere in Form des Dehydrier-Reaktors und/oder der Brennstoffzelle, in den Transport-Container 1 zu integrieren.

Die LOHC-Zuführleitung 4 dient zum Zuführen von zumindest teilweise dehydriertem LOHC aus dem LOHC-Speicherbehälter 3 in den Hydrier-Reaktor 2. Die LOHC-Abführleitung 5 dient zum Abführen von zumindest teilweise hydriertem LOHC aus dem Hydrier-Reaktor 2 in den LOHC-Speicherbehälter 3.

Der Hydrier-Reaktor 2 ist mit einer Wasserstoff-Quelle 8 über eine Wasserstoff-Leitung 9 verbunden. Die Wasserstoff-Quelle 8 ist beispielsweise als Elektrolyseur ausgeführt und ermöglicht ein Bereitstellen von Wasserstoffgas, das in dem Hydrier-Reaktor 2 in chemisch gebundener Form an dem Wasserstoff-Trägermaterial gespeichert werden kann. Es sind auch andere Wasserstoff-Quellen denkbar. Vorteilhaft ist es, dass der Transport-Container 1 an verschiedenen Wasserstoff-Quellen anschließbar ist.

Nachfolgend wird anhand der Fig. 2 der Hydrier-Reaktor 2 näher erläutert. Der Hydrier-Reaktor 2 weist ein Reaktor-Gehäuse 10 auf, in dem mehrere Katalysator-Halterungen 11 angeordnet sind. An jeder Katalysator-Halterung 11 ist ein Katalysator-Träger mit Katalysatormaterial 12 angeordnet. In der gezeigten Ausführungsform sind die Katalysator-Halterungen 11 liegend, also im Wesentlichen horizontal, angeordnet.

Es ist denkbar, die Katalysator-Halterungen 11 gegenüber der Horizontalen geneigt und insbesondere senkrecht anzuordnen. Die Katalysator-Halterungen 11 mit dem Katalysatormaterial 12 bilden ein KatalysatorFestbett. Der Hydrier-Reaktor ist einstufig betreibbar.

Die Katalysator-Halterungen 11 können Rohre und/oder Platten aufweisen und insbesondere aus Rohren und/oder Platten aufgebaut sein. Die Katalysator-Halterung 11 ist zumindest teilweise mit Katalysatormaterial 12 gefüllt. Die Katalysator-Halterung 11 kann aber auch vollständig mit Katalysatormaterial 12 gefüllt sein. Als Katalysator-Trägermaterial können Glaskugeln, Metallkugeln oder metallische Strukturen wie Röhren, Netze oder Gitter dienen, die an einer Innenseite und/oder an einer Außenseite der Katalysator-Halterung 11 angeordnet und daran angebracht sind.

An den Katalysator-Halterungen 11 ist jeweils eine Kühleinheit 13 vorgesehen, um eine unmittelbare und effiziente Kühlung des Katalysatormaterials 12 zu ermöglichen. Dadurch ist gewährleistet, die während der Hydrierung entstehenden Wärme zuverlässig aus dem Katalysatormaterial 12 und/oder der Katalysator-Halterung 11 abgeführt wird.

Die Kühleinheit 13 ist insbesondere in der Katalysator-Halterung 11 integriert. Die Kühleinheit 13 ist insbesondere als ein mit Flüssigkeit, Dampf und/oder Gas gefüllter Mantel ausgeführt.

An die LOHC-Zuführleitung 4 ist im Reaktor-Gehäuse 10 eine Verteileinheit 14 angeschlossen. Die Verteileinheit 14 ist im Wesentlichen in Form eines Duschkopfs ausgeführt und ermöglicht eine verteilte Zuführung des zumindest teilweise dehydrierten LOHC 15 auf das Katalysatormaterial 12 an den Katalysator-Halterungen 11.

Die Verteileinheit 14 kann insbesondere Kapillare, Strömungsbrecher und/oder Verteilerböden aufweisen, um eine zuverlässige, homogene Verteilung des LOHC-Edukts auf die Katalysator-Halterungen 11 zu gewährleisten.

Der Hydrier-Reaktor 2 weist eine LOHC-Austrittsöffnung 16 auf. Mittels einer Sammeleinrichtung 18 wird zumindest teilweise hydriertes LOHC 15 über die LOHC-Austrittsöffnung 16 und die LOHC-Abführleitung 5 aus dem Hydrier-Reaktor 2 abgeführt. Die Sammeleinrichtung 18 kann ein trichterförmiges Auffangbecken mit Ableitung sein. Es sind auch andere Ausführungen für die Sammeleinrichtung 18 denkbar.

Der Hydrier-Reaktor 2 weist eine Wasserstoffgas-Zuführöffnung 17 auf, über die Wasserstoffgas von der Wasserstoff-Quelle 8 über die Wasserstoff-Leitung 9 dem Hydrier-Reaktor 2 zugeführt wird. Vorteilhaft ist es, wenn die Wasserstoffgas-Zuführöffnung 17 benachbart zu den Katalysator-Halterungen 11 am Reaktor-Gehäuse 10 angeordnet ist.

Insbesondere kann innerhalb des Reaktor-Gehäuses 10 eine nicht dargestellte Ausgleichseinheit vorgesehen sein, um das Wasserstoffgas gezielt den Katalysator-Halterungen 11 zuzuführen. Die Ausgleichseinheit ist insbesondere zwischen den Katalysator-Halterungen 11 und/oder um die Katalysator-Halterungen 11 herum angeordnet, um eine zuverlässige Zuführung des Wasserstoffgases zur Schüttung des Katalysator-Materials zu ermöglichen. Insbesondere ist dadurch eine gleichmäßige Zuführung des Gases ermöglicht. Die Wasserstoffgas-Zuführöffnung 17 ist entlang der vertikalen Richtung oberhalb der Katalysator-Halterungen 11 angeordnet.

Aufgrund der geringen Dichte des Wasserstoffgases, die ein selbsttätiges Aufsteigen des Wasserstoffgases innerhalb des Reaktor-Gehäuses 10 bewirkt, kann die Wasserstoffgas-Zuführöffnung 17 entlang einer Vertikalrichtung unterhalb der Katalysator-Halterungen 11 angeordnet sein. In diesem Fall wird das Katalysatormaterial 12 von oben mit LOHC 15 und von unten mit Wasserstoffgas kontaktiert. Es sind auch andere Kontaktierungsvorgänge möglich.

Nachfolgend wird die Funktion des Hydrier-Reaktors gemäß einem ersten Verfahren näher erläutert. Ein Eduktstrom mit zumindest teilweise dehydriertem LOHC 15 als Wasserstoff-Trägermaterial wird aus dem LOHC-Speicherbehälter 3 über die LOHC-Zuführleitung 4 dem Hydrier-Reaktor zugeführt. Vor der Zuführung wird das LOHC-Edukt mit zumindest teilweise hydriertem Wasserstoff-Trägermaterial, also LOHC-Produkt, aus dem Hydrier-Reaktor 2 kontaktiert und dadurch vorgewärmt. Gleichzeitig wird das zumindest teilweise hydrierte Wasserstoff-Trägermaterial gekühlt und gegebenenfalls gereinigt.

Die LOHC-Zuführleitung 4 und die LOHC-Abführleitung 5 können zumindest abschnittsweise zusammen und/oder benachbart zueinander angeordnet sein, um eine direkte bzw. indirekte Kontaktierung von LOHC-Edukt und LOHC-Produkt, insbesondere im Gegenstromverfahren, zu ermöglichen.

Das Hydrieren des zumindest teilweise unbeladenen Wasserstoff-Trägermaterials erfolgt gemäß dem gezeigten Ausführungsbeispiel im Hydrier-Reaktor 2 bei einem Reaktionsdruck von etwa 45 bar und einer Reaktionstemperatur von etwa 230 °C. Das zu speichernde Wasserstoffgas wird vor der Zuführung aus der Wasserstoff-Quelle 8 mittels einer nicht dargestellten Konditionier-Einheit konditioniert. Das konditionierte Wasserstoffgas wird im Hydrier-Reaktor 2 am Katalysatormaterial 12 mit dem LOHC 15 kontaktiert und dadurch chemisch am LOHC gebunden. Das LOHC-Produkt wird über die LOHC-Abführleitung 5 aus dem Hydrier-Reaktor 2 abgeführt, kann, wie vorstehend bereits erläutert, zur Vorwärmung des unbeladenen LOHCs genutzt werden, und wird anschließend in dem LOHC-Speicherbehälter 3 eingelagert. Zuvor erfolgt ein Kühlen und Konditionieren des zumindest teilweise hydrierten Wasserstoff-Trägermaterials.

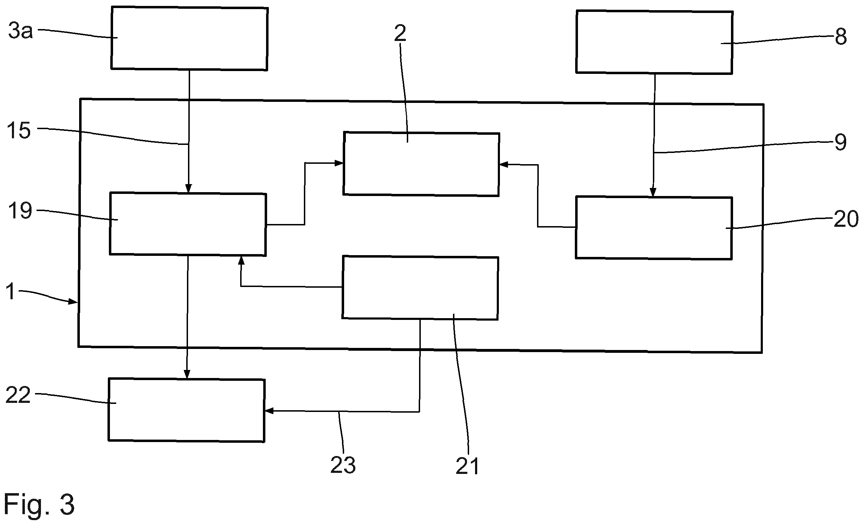

Unter Bezugnahme auf Fig. 3 wird ein zweites Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselbe Bezugszeichen mit einem nachgestellten a.

Aus LOHC-Speicherbehälter 3a wird zunächst teilweise unbeladenes LOHC 15 in den Transport-Container 1 gefördert. Der LOHC-Speicherbehälter 3a kann auch innerhalb des Transport-Containers 1 angeordnet sein.

In einer Wärme-Rekuperations-Einheit 19 wird das LOHC 15 vorgewärmt. Wasserstoff aus einer Wasserstoff-Quelle 8 wird über eine Wasserstoff-Leitung 9 in den Transport-Container 1 gefördert. In einer Vorkonditionier-Einheit 20 erfolgt die Vorkonditionierung des Wasserstoffs durch z.B. Trocknung oder Filterung von festen Bestandteilen und/oder der Vorwärmung.

Im Hydrier-Reaktor 2 werden vorgewärmtes LOHC 15 und konditionierter Wasserstoff kontaktiert. Das zumindest teilweise beladene LOHC 23 aus dem Hydrier-Reaktor 2 wird in einer Nachkonditionier-Einheit 21 aufbereitet, insbesondere durch z.B. Entgasung, so dass anschließend die einfache Handhabung des LOHC 23 sichergestellt ist. Gegebenenfalls wird das LOHC-Produkt vor oder nach der Nachkonditionierung ganz oder teilweise genutzt, um in der Wärme-Rekuperations-Einheit 19 das LOHC-Edukt vorzuwärmen, was durch direkten oder indirekten Kontakt geschehen kann. Fertig konditioniertes und beladenes LOHC 23 wird in einem außerhalb des Transport-Containers 1 angeordneter zweiter Speicherbehälter 22 überführt.

Die Konditionierung des LOHC 23 nach dem Hydrier-Reaktor 2 wird insbesondere so ausgeführt, dass in dem zweiten LOHC-Speicherbehälter 22 eine gefahrlose Lagerung möglich ist. Eine Ausbildung explosionsfähiger Atmosphäre durch Rest-Wasserstoff ist vermieden.

## Patentansprüche

1. Verfahren zum Speichern von Wasserstoffgas umfassend die Verfahrensschritte
- Vorwärmen eines zumindest teilweise dehydrierten Wasserstoff-Trägermaterials,
- Speichern des Wasserstoffgases in chemisch gebundener Form an dem Wasserstoff-Trägermaterial,
- Kühlen und Konditionieren des zumindest teilweise hydrierten Wasserstoff-Trägermaterials,
**gekennzeichnet durch**
- Kühlen eines Katalysatormaterials (12) in mindestens einer Katalysator-Halterung (11) mittels einer an der mindestens einen Katalysator-Halterung (11) vorgesehenen Kühleinheit (13).

2. Verfahren gemäß Anspruch 1, **dadurch gekennzeichnet, dass** das Vorwärmen des zumindest teilweise dehydrierten Wasserstoff-Trägermaterials ein Kontaktieren mit dem zumindest teilweise hydrierten Wasserstoff-Trägermaterial umfasst.

3. Verfahren gemäß einem der vorstehenden Ansprüche, **dadurch gekennzeichnet, dass** das Speichern des Wasserstoffgases bei einem Prozessdruck zwischen 30 bar und 60 bar, insbesondere zwischen 40 bar und 50 bar, insbesondere etwa 45 bar, und/oder bei einer Prozesstemperatur zwischen 200 °C und 350 °C, insbesondere zwischen 230 °C und 330 °C, insbesondere zwischen 250 °C und 310 °C erfolgt.

4. Verfahren gemäß einem der vorstehenden Ansprüche, **gekennzeichnet durch** ein Konditionieren des Wasserstoffgases, wobei das Konditionieren insbesondere ein Vorwärmen des Wasserstoffgases und/oder ein Abtrennen mindestens einer Verunreinigung umfasst, wobei die mindestens eine Verunreinigung insbesondere in festem und/oder gasförmigem Aggregatzustand vorliegt.

5. Verfahren gemäß Anspruch 4, **dadurch gekennzeichnet, dass** das Abtrennen mindestens eine Abtrennstufe, insbesondere mehrere Abtrennstufen, umfasst, wobei insbesondere die mindestens eine Abtrennstufe zum Abtrennen einer Verunreinigung eines bestimmten Aggregatzustands dient.

6. Verfahren gemäß Anspruch 4 oder 5, **dadurch gekennzeichnet, dass** das Abtrennen eine katalytische Umwandlung und/oder eine adsorptive Trocknung aufweist.

7. Verfahren gemäß einem der Ansprüche 4 bis 6, **dadurch gekennzeichnet, dass** das Abtrennen ein Entschwefeln umfasst.

8. Verfahren gemäß einem der Ansprüche 4 bis 7, **dadurch gekennzeichnet, dass** das Konditionieren solange erfolgt, bis ein, insbesondere veränderlich, einstellbarer Reinheitsgrad des Wasserstoffgases erreicht ist.

9. Verfahren gemäß einem der vorstehenden Ansprüche, **dadurch gekennzeichnet, dass** das Kühlen des zumindest teilweise hydrierten Wasserstoff-Trägermaterials mittels einer zusätzlichen Kühleinheit erfolgt.

10. Verfahren gemäß einem der vorstehenden Ansprüche, **dadurch gekennzeichnet, dass** das Konditionieren des zumindest teilweise hydrierten Wasserstoffträger-Materials ein Entfernen von physikalisch gelöstem Wasserstoffgas in dem Wasserstoff-Trägermaterial umfasst.

11. Hydrier-Reaktor umfassend
a. ein Reaktor-Gehäuse (10),
b. mindestens eine im Reaktor-Gehäuse (10) angeordnete Katalysator-Halterung (11), an der ein Katalysatorträger mit Katalysatormaterial (12) angeordnet ist,
c. eine an der mindestens einen Katalysator-Halterung (11 vorhandene Kühleinheit (13) zum unmittelbaren und effizienten Kühlen des Katalysatormaterials (12) in der mindestens einen Katalysator-Halterung (11),
d. eine Verteileinheit (14) zum gleichmäßigen Verteilen eines Zulaufstroms von zumindest teilweise dehydriertem Wasserstoff-Trägermaterial und Wasserstoffgas auf die mindestens eine Katalysator-Halterung (11),
e. eine Austrittsöffnung (16) zum kontinuierlichen Abführen von zumindest teilweise hydriertem Wasserstoff-Trägermaterial aus dem Hydrier-Reaktor (2).

12. Hydrier-Reaktor gemäß Anspruch 11, **dadurch gekennzeichnet, dass** als Katalysatormaterial Platin, Palladium, Nickel, Rhodium und/oder Ruthenium mit jeweils einen Gewichtanteil von 0,1% bis 10% bezogen auf den, insbesondere inerten, Katalysatorträger dient.

13. Hydrier-Reaktor gemäß Anspruch 11 oder 12, **dadurch gekennzeichnet, dass** der Katalysatorträger Aluminiumoxid, Siliziumoxid, Siliziumcarbid und/oder Aktivkohle umfasst.

14. Hydrier-Reaktor gemäß einem der Ansprüche 11 bis 13, **dadurch gekennzeichnet, dass** die Kühleinheit (13) einen mit Flüssigkeit, Dampf und/oder Gas gefüllten Mantel aufweist.

15. Transport-Container, in dem ein Hydrier-Reaktor (2) gemäß einem der Ansprüche 11 bis 14 angeordnet ist.

## Claims

1. Method for storing hydrogen gas comprising the process steps
- pre-heating of an at least partially dehydrogenated hydrogen carrier material,
- storing the hydrogen gas in chemically bound form on the hydrogen carrier material,
- cooling and conditioning of the at least partially hydrogenated hydrogen carrier material,
**characterized by**
- cooling a catalyst material (12) in at least one catalyst mount (11) by means of a cooling unit (13) provided at the at least one catalyst mount (11).

2. Method according to claim 1, **characterized in that** the pre-heating of the at least partially dehydrogenated hydrogen carrier material comprises a contacting with the at least partially hydrogenated hydrogen carrier material.

3. Method according to one of the preceding claims, **characterized in that** the storage of the hydrogen gas takes place at a process pressure between 30 bar and 60 bar, in particular between 40 bar and 50 bar, in particular about 45 bar, and/or at a process temperature between 200 °C and 350 °C, in particular between 230 °C and 330 °C, in particular between 250 °C and 310 °C.

4. Method according to one of the preceding claims, **characterized by** conditioning of the hydrogen gas, wherein the conditioning comprises in particular pre-heating the hydrogen gas and/or a separation of at least one impurity, wherein the at least one impurity, in particular, is present in solid and/or gaseous aggregate state.

5. Method according to claim 4, **characterized in that** the separation comprises at least one separation stage, in particular several separation stages, wherein in particular the at least one separation stage serves for separating an impurity of a specific aggregate state.

6. Method according to claim 4 or 5, **characterized in that** the separation shows a catalytic conversion and/or adsorptive drying.

7. Method according to one of claims 4 to 6, **characterized in that** the separation comprises a desulfurization.

8. Method according to one of claims 4 to 7, **characterized in that** the conditioning takes place until a, in particular variably, adjustable degree of purity of the hydrogen gas is achieved.

9. Method according to one of the preceding claims, **characterized in that** the cooling of the at least partially hydrogenated hydrogen carrier material takes place by means of an additional cooling unit.

10. Method according to one of the preceding claims, **characterized in that** the conditioning of the at least partially hydrogenated hydrogen carrier material comprises a removal of physically dissolved hydrogen gas in the hydrogen carrier material.

11. Hydrogenation reactor comprising
a. a reactor housing (10),
b. at least one catalyst mount (11) arranged in the reactor housing (10), on which a catalyst carrier with catalyst material (12) is arranged,
c. a cooling unit (13) provided on the at least one catalyst mount (11) for directly and efficiently cooling the catalyst material (12) in the at least one catalyst mount (11),
d. a distribution unit (14) for uniform distribution of an intake flow of at least partially dehydrogenated hydrogen carrier material and hydrogen gas to the at least one catalyst mount (11),
e. an outlet opening (16) for continuous discharge of at least partially hydrogenated hydrogen carrier material from the hydrogenation reactor (2).

12. Hydrogenation reactor according to claim 11, **characterized in that** platinum, palladium, nickel, rhodium and/or ruthenium each with a weight portion of 0.1% to 10% with reference to the, in particular inert, catalyst carrier, serves as catalyst material.

13. Hydrogenation reactor according to claim 11 or 12, **characterized in that** the catalyst carrier comprises aluminum oxide, silicon oxide, silicon carbide and/or activated carbon.

14. Hydrogenation reactor according to one of claims 11 to 13, **characterized in that** the cooling unit (13) has a sleeve filled with liquid, vapor and/or gas.

15. Transport container in which a hydrogenation reactor (2) according to any one of claims 11 to 14 is arranged.

## Revendications

1. Procédé de stockage de gaz hydrogène comprenant les étapes de procédé suivantes
- préchauffage d'un matériau porteur d'hydrogène au moins partiellement déshydrogéné,
- stockage du gaz hydrogène sous forme chimiquement liée sur le matériau porteur d'hydrogène,
- refroidissement et conditionnement du matériau porteur d'hydrogène au moins partiellement hydrogéné,
**caractérisé par**
- le refroidissement d'un matériau de catalyseur (12) dans au moins un support de catalyseur (11) au moyen d'une unité de refroidissement (13) prévue sur ledit au moins un support de catalyseur (11).

2. Procédé selon la revendication 1, **caractérisé en ce que** le préchauffage du matériau porteur d'hydrogène au moins partiellement déshydrogéné comprend une mise en contact avec le matériau porteur d'hydrogène au moins partiellement hydrogéné.

3. Procédé selon l'une quelconque des revendications précédentes, **caractérisé en ce que** le stockage du gaz hydrogène est effectué à une pression de procédé comprise entre 30 bars et 60 bars, en particulier entre 40 bars et 50 bars, en particulier environ 45 bars, et/ou à une température de procédé comprise entre 200°C et 350°C, en particulier entre 230°C et 330°C, en particulier entre 250°C et 310°C.

4. Procédé selon l'une quelconque des revendications précédentes, **caractérisé par** un conditionnement du gaz hydrogène, dans lequel ledit conditionnement comprend en particulier un préchauffage du gaz hydrogène et/ou une séparation d'au moins une impureté, dans lequel ladite au moins une impureté est présente en particulier à l'état d'agrégat solide et/ou gazeux.

5. Procédé selon la revendication 4, **caractérisé en ce que** la séparation comprend au moins une étape de séparation, en particulier plusieurs étapes de séparation, dans lequel ladite au moins une étape de séparation sert en particulier à séparer une impureté d'un état d'agrégat déterminé.

6. Procédé selon la revendication 4 ou 5, **caractérisé en ce que** la séparation présente une conversion catalytique et/ou un séchage par adsorption.

7. Procédé selon l'une quelconque des revendications 4 à 6, **caractérisé en ce que** la séparation comprend une désulfuration.

8. Procédé selon l'une quelconque des revendications 4 à 7, **caractérisé en ce que** le conditionnement est effectué jusqu'à ce qu'un degré de pureté, en particulier variable, du gaz hydrogène soit atteint.

9. Procédé selon l'une quelconque des revendications précédentes, **caractérisé en ce que** le refroidissement du matériau porteur d'hydrogène au moins partiellement hydrogéné est effectué au moyen d'une unité de refroidissement supplémentaire.

10. Procédé selon l'une quelconque des revendications précédentes, **caractérisé en ce que** le conditionnement du matériau porteur d'hydrogène au moins partiellement hydrogéné comprend l'élimination du gaz hydrogène physiquement dissous dans le matériau porteur d'hydrogène.

11. Réacteur d'hydrogénation comprenant
a. un boîtier de réacteur (10),
b. au moins un support de catalyseur (11) disposé dans le boîtier de réacteur (10), sur lequel est disposé un porteur de catalyseur avec un matériau de catalyseur (12),
c. une unité de refroidissement (13) présente sur ledit au moins un support de catalyseur (11) pour refroidir directement et efficacement le matériau de catalyseur (12) dans ledit au moins un support de catalyseur (11),
d. une unité de distribution (14) pour distribuer uniformément un flux d'alimentation de matériau porteur d'hydrogène au moins partiellement déshydrogéné et de gaz hydrogène sur ledit au moins un support de catalyseur (11),
e. un orifice de sortie (16) pour l'évacuation continue du matériau porteur d'hydrogène au moins partiellement hydrogéné hors du réacteur d'hydrogénation (2).

12. Réacteur d'hydrogénation selon la revendication 11, **caractérisé en ce que** l'on utilise comme matériau catalyseur du platine, du palladium, du nickel, du rhodium et/ou du ruthénium avec respectivement une proportion en poids de 0,1 % à 10 % par rapport au porteur de catalyseur, en particulier inerte.

13. Réacteur d'hydrogénation selon la revendication 11 ou 12, **caractérisé en ce que** le porteur de catalyseur comprend de l'alumine, de la silice, du carbure de silicium et/ou du charbon actif.

14. Réacteur d'hydrogénation selon l'une quelconque des revendications 11 à 13, **caractérisé en ce que** l'unité de refroidissement (13) présente une enveloppe remplie de liquide, de vapeur et/ou de gaz.

15. Conteneur de transport dans lequel est disposé un réacteur d'hydrogénation (2) selon l'une quelconque des revendications 11 à 14.
